Europäisches Patentamt

European Patent Office

Office européen des brevets

(11) Numéro de publication : **0 376 784 B1**

# (12) FASCICULE DE BREVET EUROPEEN

(45) Date de publication du fascicule du brevet :
**11.03.92 Bulletin 92/11**

(51) Int. Cl.⁵ : **F16B 15/00,** F16B 13/14,
**E04F 13/08**

(21) Numéro de dépôt : **89403476.8**

(22) Date de dépôt : **14.12.89**

(54) **Cheville de fixation dans des matériaux friables.**

(30) Priorité : **28.12.88 FR 8817296**

(43) Date de publication de la demande :
**04.07.90 Bulletin 90/27**

(45) Mention de la délivrance du brevet :
**11.03.92 Bulletin 92/11**

(84) Etats contractants désignés :
**AT BE CH DE ES FR GB GR IT LI LU NL SE**

(56) Documents cités :
**AT-B- 349 837**
**DE-A- 2 049 255**
**DE-A- 2 254 958**
**FR-A- 1 077 817**

(73) Titulaire : **PLOMBELEC**
**Rue Gallet B.P. 31**
**F-45130 Meung-sur-Loire (FR)**

(72) Inventeur : **Es, Willy**
**29, Rue Galliéni**
**F-92600 Asnières (FR)**

(74) Mandataire : **Flavenot, Bernard**
**Société ABRITT 17, rue du Docteur Charcot La**
**Norville**
**F-91290 Arpajon (FR)**

# Description

La présente invention concerne les chevilles de fixation dans des matériaux relativement friables, par exemple du polystyrène expansé comme celui qui est très utilisé, en particulier, pour l'isolation thermique des locaux d'habitation, industriels ou commerciaux, étant précisé que par "cheville de fixation", il est entendu tout système apte à être introduit dans un support pour se solidariser avec lui et permettre l'accrochage de tout objet.

Dans de nombreux domaines techniques et industriels, on est parfois amené à utiliser des matériaux relativement friables, bien qu'ayant une certaine rigidité même lorsqu'ils se présentent sous forme de plaques ou panneaux avec éventuellement, en plus, une feuille de protection collée sur les faces de plus grandes dimensions. Ces matériaux ne peuvent en général résister à des efforts d'arrachement que si ces derniers sont répartis sur une grande surface afin que leur intensité par unité de surface soit la plus faible possible.

Il est cependant bien évident que, dans certains cas, il ne soit pas possible d'obtenir une telle répartition des efforts exercés, notamment lorsqu'il est par exemple nécessaire de fixer des éléments extérieurs sur de tels panneaux en utilisant des systèmes de fixation du type chevilles.

Les chevilles connues actuellement ne permettent pas d'atteindre ce but. En effet, celles comportant une pointe éventuellement vrillée surmontée d'une tête ne peuvent pas tenir dans un matériau friable, les forces de rétention exercées sur la pointe par le matériau n'étant pas suffisantes pour empêcher le moindre effort appliqué sur la tête d'arracher ce type de cheville hors du matériau. Il existe bien sûr d'autres systèmes qui consistent en une cheville que l'on place dans un avant-trou réalisé dans le matériau, et dont l'extrémité introduite dans le trou peut être assez dilatée pour venir s'ancrer dans la paroi latérale de cet avant-trou. Cette technique ne donne pas non plus satisfaction, car les efforts très importants qui s'exercent sur cette extrémité détruisent très rapidement la paroi du trou, rendant ainsi moins sûre la fixation.

La présente invention a pour but de pallier les inconvénients mentionnés ci-dessus et de réaliser une cheville de fixation dans des matériaux friables, dont les efforts de pénétration peuvent être répartis sur un maximum de surface, pour donner à cette cheville une assise dans le matériau plus fiable que celle des chevilles selon l'art antérieur.

Plus précisément, la présente invention a pour objet une cheville de fixation apte à être implantée dans un matériau friable comme, par exemple, du polystyrène expansé, comprenant :

au moins une patte de forme oblongue réalisée dans une plaque peu épaisse de matériau rigide, ladite patte ayant une première extrémité apte à pénétrer dans ledit matériau friable,

une tête fixée à la deuxième extrémité de ladite patte, cette tête ayant une section plus large que la section transversale de ladite patte pour former avec cette dernière un épaulement, caractérisée par le fait qu'elle comprend en outre :

une poche étanche réalisée dans un matériau souple pouvant être percé et contenant une colle permettant de coller entre eux le matériau rigide de ladite patte et le matériau friable,

des moyens de perçage de la poche associés à ladite patte, et

des moyens pour maintenir ladite poche en coopération avec ladite patte de façon que, lorsqu'une force de pression est appliquée sur ladite poche en ayant au moins une composante sensiblement orientée de la première extrémité de la patte vers la deuxième, ladite poche vienne coopérer avec lesdits moyens de perçage afin que ladite colle puisse s'écouler sur au moins une partie de la paroi de ladite patte.

D'autres caractéristiques et avantages de la présente invention apparaîtront au cours de la description suivante donnée en regard des dessins annexés à titre illustratif, mais nullement limitatif, dans lesquels :

La figure 1 représente une vue en perspective d'un mode de réalisation d'une cheville selon l'invention,

La figure 2 représente, vue en coupe schématique, une cheville en accord avec la figure 1, dans une application à la fixation d'un élément sur un panneau, par exemple en polystyrène expansé, et

La figure 3 représente un autre mode de réalisation d'une cheville selon l'invention, avantageux essentiellement pour la fabrication industrielle de la cheville.

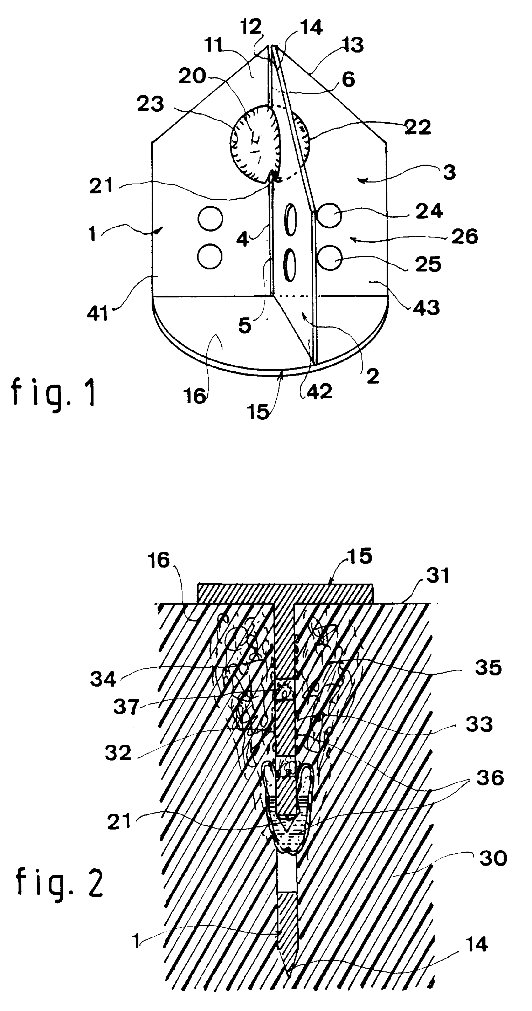

La cheville de fixation apte à être implantée dans un matériau friable comme, par exemple, du polystyrène expansé, comprend au moins une patte 1 de forme oblongue réalisée dans une plaque peu épaisse de matériau rigide, par exemple métallique ou plastique. Cette patte a une première extrémité 11 conformée en pointe pénétrante, à la manière des pattes des moyens qui sont connus sous la terminologie de "punaises", et présentant avantageusement une forme coupante pour éviter une détérioration du matériau friable aux alentours de la patte lorsque celle-ci y pénètre. Dans l'exemple illustré sur les figures 1 et 2, la cheville comporte trois pattes 1, 2, 3 adjacentes suivant un de leurs côtés de faible épaisseur 4, 5, 6, dont les premières extrémités 11, 12, 13 sont conformées en pointes à bords coupants et dont les sommets sont sensiblement confondus en un seul point constituant le point de pénétration 14 de la cheville dans le matériau.

Dans ce cas, les différentes pattes forment avantageusement entre elles des dièdres d'arêtes sensiblement confondues et d'angles au sommet sensiblement égaux à 120 degrés, et leurs premières extrémités conformées en pointe sont découpées en biseau coupant.

Cette cheville comporte en outre une tête 15 fixée à l'extrémité de la patte 1 opposée à celle qui est conformée en pointe, cette tête ayant une section plus large que la section transversale de la patte, pour former avec celle-ci un épaulement 16. Dans le mode de réalisation de la cheville illustré sur les figure 1 et 2, la tête 15 est fixée sur les extrémités 41, 42, 43 des trois pattes 1, 2, 3 opposées à celles qui sont conformées en pointe et forme avec les pattes un épaulement 16, de la même façon que pour la punaise mentionnée ci-avant.

Cependant, la cheville comprend en plus une poche étanche 20 réalisée dans un matériau souple mais pouvant être assez facilement percé, par exemple une feuille mince de matière plastique, de papier plastifié étanche ou d'aluminium. Ce matériau doit en plus être apte à contenir et conserver une colle 36 permettant de coller entre eux le matériau rigide dans lequel sont réalisées les pattes et le matériau friable dans lequel la cheville est destinée à être enfichée, la nature de cette colle 36 étant bien sûr choisie en fonction des propriétés de ces matériaux.

La cheville comporte en plus des moyens de perçage de la poche associés aux pattes, ou à la patte dans la mesure où la cheville n'en comporte qu'une, et des moyens pour maintenir la poche 20 en coopération avec les pattes de façon que, lorsqu'une force de pression est appliquée sur cette poche en ayant au moins une composante orientée sensiblement du point de pénétration 14 de la cheville vers la tête 15, la poche vienne coopérer avec les moyens de perçage pour créer une fuite de la colle 36 et un écoulement de celle-ci sur au moins une partie de la paroi latérale des pattes. Comme explicité ci-après, il est ainsi obtenu une imprégnation de la partie du matériau friable située au voisinage de la patte, ou des pattes, permettant, d'une part, de le rendre plus solide et, d'autre part, de le coller avec le matériau dans lequel sont réalisées les pattes.

Dans un mode de réalisation avantageux, les moyens de perçage sont constitués par une partie pointue 21 solidaire de la patte, ou de chaque patte, et tournée vers les extrémités en pointe 11, 12, 13 de ces pattes.

Les moyens pour maintenir la poche en coopération avec la patte 1 sont avantageusement constitués par une ouverture 22 pratiquée dans cette patte et ayant par exemple une section inférieure à celle de la poche lorsqu'elle est remplie de colle, de façon que cette poche pleine soit maintenue en étant pincée par le bord 23 de l'ouverture. Il est à noter que cette ouverture peut avantageusement traverser la patte de part en part, permettant ainsi à la poche pleine de déborder de chaque côté lorsqu'elle est disposée dans l'ouverture. Dans le mode de réalisation de la cheville illustré comportant trois pattes, l'ouverture 22 est pratiquée dans chaque patte en étant ouverte sur l'arête des dièdres commune. Lorsque la poche pleine de colle est placée dans cette ouverture, sa paroi est alors maintenue par les trois bords 23 qui l'enserrent, éventuellement en la pinçant légèrement.

Dans une réalisation avantageuse, la partie pointue 21 permettant d'effectuer le perçage de la poche est solidaire de la patte sur le bord 23 de l'ouverture 22 et, dans le cas du mode de réalisation illustré, elle est avantageusement située sur l'arête des dièdres commune, en étant au contact de la paroi de la poche quand celle-ci est placée dans l'ouverture comme décrit ci-avant.

Dans une réalisation qui peut constituer un perfectionnement intéressant, chaque patte comporte en outre au moins une percée 24, 25 réalisée dans sa partie 26 située sensiblement entre l'ouverture 22 et la tête 15.

La cheville dont la structure à été décrite ci-dessus s'utilise de la façon suivante, cette description étant plus particulièrement donnée en regard de la figure 2.

La cheville comprenant la poche 20 remplie de colle 36 adaptée au collage du matériau friable 30 avec celui de la patte 1 est approchée du support dans lequel elle doit être introduite et fixée, jusqu'à ce que son point de pénétration 14 soit amené au contact de la surface 31. Par une pression adaptée sur la tête 15, la patte 1 pénètre dans le matériau, avantageusement en le coupant, jusqu'à ce que la poche vienne au contact de cette surface 31. La force appliquée sur la tête entraîne alors la création d'une force de réaction de la surface 31 sur la poche 20 qui s'appuie sur elle, qui est orientée de la pointe 14 vers la tête 15 et oblige la poche a venir appuyer de plus en plus fortement sur la partie pointue 21. Cette partie pointue perce alors la poche et permet à la colle 36 de s'écouler dans les espaces infimes 32, 33 existant entre les parois de la patte et le matériau friable et entre les particules elles-mêmes de ce matériau, au fur et à mesure que la patte s'enfonce dans le matériau tout en aplatissant la poche jusqu'à la vider du maximun de colle. La cheville est enfoncée dans le matériau jusqu'à ce que l'épaulement 16 vienne directement ou indirectement au contact de la surface 31, selon qu'il emprisonne ou non une pièce annexe.

Au cours de l'enfoncement de la cheville de fixation dans le support en matériau friable, la colle 36, dans un premier temps, va donc se diffuser dans les régions 34, 35 du matériau qui se trouvent au voisinage des espaces 32, 33. Le matériau ainsi imprégné va être solidifié lors du séchage de la colle. Simultanément, la colle située dans les espaces 32, 33 entre la patte et le matériau friable va coller les parois latérales de la patte avec ces portions de matériau 34, 35 pour obtenir un ancrage de la patte dans le matériau rendu localement plus solide. De plus, les parois de matériau obtenues lors de la découpe de celui-ci pendant la pénétration de la cheville et qui se trouvent en regard l'une de l'autre de part et d'autre des orifices 24, 25 s'imprègnent, elles aussi, de colle 36 et se solidarisent lors du séchage de la colle, constituant ainsi un pont entre les deux régions de matériau 34, 35 qui assure un ancrage de la cheville encore plus fiable.

Bien entendu, d'une façon classique, un élément extérieur pourra être fixé en étant pris entre la tête 15 et la surface 31. Cette technique étant bien connue en elle-même, un tel élément n'a pas été représenté, dans un souci de simplification du dessin.

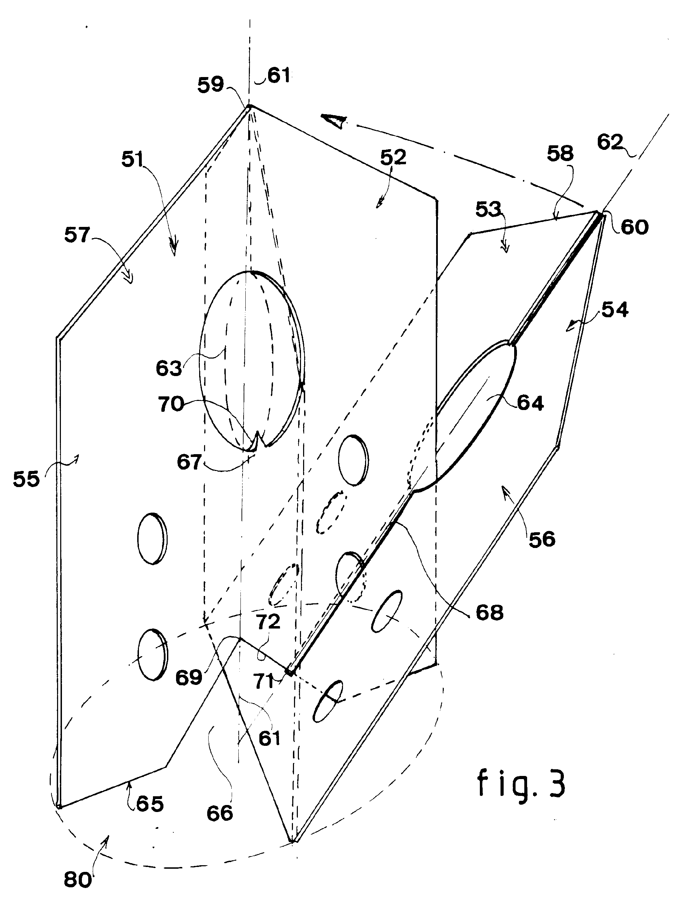

La figure 3 représente un autre mode de réalisation d'une cheville selon l'invention, qui présente l'avantage incontestable de permettre une fabrication industrielle très simple de cette cheville. La cheville illustrée sur cette figure 3 comprend, selon la définition donnée ci-avant, quatre pattes 51-54 assemblées deux à deux pour former deux pièces planes 55, 56 pouvant être disposées, dans leur assemblage final, à quatre-vingt-dix degrés l'une par rapport à l'autre.

Chaque pièce plane 55, 56 est réalisée, par exemple par emboutissage, dans une plaque mince dont un côté 57, 58 est découpé en forme de "V" de sommet 59, 60, ce sommet constituant le point de pénétration de la cheville et les deux branches du "V" étant avantageusement conformées en lames coupantes.

Chaque pièce plane comporte une ouverture traversante 63, 64 centrée sur l'axe de symétrie 61, 62 passant par le sommet 59, 60, et à une même distance de ce sommet.

Dans l'une des pièces planes, en l'occurrence la pièce 55, sur le côté 65 opposé à celui conformé en "V", est réalisée une encoche 66 centrée sur l'axe de symétrie 61. La profondeur de cette encoche est inférieure à la distance séparant le côté 65 de la partie la plus proche, 67 du bord de l'ouverture 63. Quant à la seconde pièce plane 56 telle qu'illustrée, elle comporte une fente 68 réalisée suivant l'axe de symétrie 62 et d'une largeur légèrement supérieure à l'épaisseur de la pièce 55. Cette fente 68 traverse l'ouverture 64 en étant découpée à partir du sommet 60 et sur une longueur légèrement supérieure à la distance séparant le sommet 59 de la plaque 55, du fond 69 de l'encoche 66.

De même que précédemment, à ces pattes 51-54 sont associés des moyens de perçage schématiquement illustrés par une partie perçante 70 définie, par exemple, dans l'ouverture 63 à proximité de la partie 67 de son bord.

L'ensemble de ces deux pièces décrites ci-dessus constituant les quatre pattes sera très facilement réalisé par emboutissage, notamment à la manière d'emporte-pièces.

Pour obtenir la cheville dans sa structure définitive, on place la poche remplie de colle dans l'ouverture 63, en la maintenant temporairement à la main. Puis, on place la seconde pièce 56 de façon que le fond 71 de la fente 68 vienne buter contre le bord 72 de l'encoche 66.

Si les plaques dans lesquelles sont réalisées les pièces décrites ci-dessus sont relativement rigides, on fait alors pivoter la pièce 56 autour d'un axe sensiblement perpendiculaire au plan de la pièce 55 jusqu'à ce que les deux axes de symétrie 61, 62 soient sensiblement confondus, ainsi que les deux sommets 59, 60. Du fait de la position de chaque ouverture 63, 64 dans chaque pièce 55, 56, leurs centres viennent se confondre sensiblement et leurs bords se trouvant alors dans deux plans perpendiculaires emprisonnent et maintiennent la poche de colle.

Si les plaques sont relativement souples, les deux pièces peuvent être associées par leurs encoche et fente de façon à être sensiblement dans un même plan. La poche de colle est placée dans les ouvertures qui se trouvent alors sensiblement confondues, puis les deux pièces sont pivotées l'une par rapport à l'autre suivant leurs axes de symétrie confondus, jusqu'à être amenées dans deux plans sensiblement perpendiculaires, pour leur permettre d'emprisonner la poche de colle, comme décrit ci-avant.

Lorsque les deux pièces planes 55, 56 sont ainsi positionnées, la cheville est terminée en associant à ces deux pièces 55, 56, par exemple par soudage, une tête d'épaulement 80 comme celle qui a été décrite sous la référence 15 en regard des figures 1 et 2.

L'utilisation de la cheville selon ce mode de réalisation est strictement identique à celle décrite ci-avant, et ne sera donc pas décrite à nouveau.

**Revendications**

1. Cheville de fixation apte à être implantée dans un matériau friable comme, par exemple, du polystyrène expansé, comprenant :

   au moins une patte (1) de forme oblongue réalisée dans une plaque peu épaisse de matériau rigide, ladite patte ayant une première extrémité (11) apte à pénétrer dans ledit matériau friable,

   une tête (15) fixée à la deuxième extrémité (41-43) de ladite patte, cette tête ayant une section plus large que la section transversale de ladite patte pour former avec cette dernière un épaulement (16), caractérisée par le fait qu'elle comprend en outre :

   une poche (20) étanche réalisée dans un matériau souple pouvant être percé et contenant une colle (36) permettant de coller entre eux le matériau rigide de ladite patte et le matériau friable (30),

   des moyens de perçage de la poche associés à ladite patte, et

des moyens pour maintenir ladite poche en coopération avec ladite patte de façon que, lorsqu'une force de pression est appliquée sur ladite poche en ayant au moins une composante sensiblement orientée de la première extrémité de la patte vers la deuxième, ladite poche vienne coopérer avec lesdits moyens de perçage afin que ladite colle puisse s'écouler sur au moins une partie de la paroi de ladite patte.

2. Cheville selon la revendication 1, caractérisée par le fait que lesdits moyens de perçage sont constitués par une partie pointue (21) solidaire de ladite patte et tournée vers la première extrémité (11) de ladite patte.

3. Cheville selon l'une des revendications 1 et 2, caractérisée par le fait que les moyens pour maintenir ladite poche (20) en coopération avec ladite patte (1) sont constitués par une ouverture (22) pratiquée dans ladite patte.

4. Cheville selon la revendication 3, caractérisée par le fait que ladite ouverture (22) traverse de part en part ladite patte.

5. Cheville selon l'une des revendications 2 à 4, caractérisée par le fait que ladite partie pointue (21) est solidaire de ladite patte sur le bord (23) de ladite ouverture (22).

6. Cheville selon l'une des revendications 3 à 5, caractérisée par le fait que ladite patte comporte au moins une percée (24,25) réalisée dans ladite patte dans sa partie située entre ladite ouverture et ladite tête.

7. Cheville selon l'une des revendications 1 à 6, caractérisée par le fait que ladite première extrémité (11) de ladite patte est à bord coupant avantageusement en biseau.

8. Cheville selon l'une des revendications précédentes, caractérisée par le fait qu'elle comporte au moins deux pattes (1,2,3) adjacentes l'une à l'autre par un bord (4,5,6), pour former un dièdre.

9. Cheville selon la revendication 8, caractérisée par le fait qu'elle comporte quatre pattes (51-54) formant entre elles des dièdres d'arêtes confondues et d'angles au sommet sensiblement égaux à quatre-vingt-dix degrés.

10. Cheville selon la revendication 9, caractérisée par le fait que lesdites quatre pattes sont associées deux à deux pour former deux pièces planes (55, 56) comportant chacune un axe de symétrie (61, 62) et une ouverture traversante (63, 64) centrée sur l'axe de symétrie, une première (55) des deux pièces planes comportant une encoche (66) centrée sur son axe de symétrie (61) et réalisée en dehors de ladite ouverture (63), la seconde pièce plane (56) comportant une fente (68) d'une largeur sensiblement supérieure à l'épaisseur de ladite première pièce et réalisée sur ledit axe de symétrie (62) de cette seconde pièce, ladite fente traversant ladite ouverture (64) réalisée dans cette dite seconde pièce et la distance séparant le fond (71) de ladite fente (68), du bord de cette dite ouverture (64), étant au moins égale à la distance séparant le fond (69) de l'encoche (66), du bord (67) de l'ouverture (63) réalisée dans ladite première pièce, les deux dites pièces étant associées dans deux plans sensiblement perpendiculaires, par leurs fente et encoche de façon que le fond de la fente vienne en regard du fond de l'encoche et que les deux ouvertures soient sensiblement centrées, ladite poche de colle étant emprisonnée dans l'espace délimité par les bords des deux dites ouvertures.

**Patentansprüche**

1. In bröckeliges Material wie beispielsweise Polystyrol-Hartschaum einfügbarer Dübel, umfassend:

mindestens einen Lappen (1) langgestreckter Form, hergestellt aus einer Platte geringer Dicke aus starrem Material, welcher Lappen ein in das bröckelige Material penetrierbares erstes Ende (11) aufweist,

einen an dem zweiten Ende (41-43) des Lappens befestigten Kopf (15) mit einem Querschnitt, der größer ist als der transversale Querschnitt des Lappens, um mit diesem letzteren eine Schulter (16) zu bilden, dadurch gekennzeichnet, daß er ferner umfaßt:

eine abgedichtete Tasche (20), hergestellt aus einem weichen aufbrechbaren Material und mit einem Klebstoff (36) gefüllt, der es ermöglicht, das starre Material des Lappens und das bröckelige Material (30) miteinander zu verkleben,

dem Lappen zugeordnete Mittel zum Aufbrechen der Tasche, und

Mittel zum Zusammenwirkenlassen der Tasche mit dem Lappen derart, daß beim Einwirken einer Druckkraft auf die Tasche mit zumindest einer Komponente, die im wesentlichen vom ersten Ende des Lappens zu seinem zweiten Ende gerichtet ist, die Tasche mit den Aufbrechmitteln in Wirkverbindung tritt, damit der Klebstoff auf mindestens einen Abschnitt der Lappenwandung austreten kann.

2. Dübel nach Anspruch 1, dadurch gekennzeichnet, daß die Aufbrechmittel von einer mit dem Lappen verbundenen und auf das erste Lappenende (11) gerichteten Spitze (21) gebildet sind.

3. Dübel nach einem der Ansprüche 1 und 2, dadurch gekennzeichnet, daß die Mittel zum Zusammenwirkenlassen der Tasche (20) mit dem Lappen (1) von einer in den Lappen eingebrachten Öffnung (22) gebildet sind.

4. Dübel nach Anspruch 3, dadurch gekennzeichnet, daß die Öffnung (22) den Lappen von einer zur andern Seite durchsetzt.

5. Dübel nach einem der Ansprüche 2 bis 4, dadurch gekennzeichnet, daß die Spitze (21) mit dem Lappen an der Kante (23) der Öffnung (22) verbunden ist,

6. Dübel nach einem der Ansprüche 3 bis 5, dadurch gekennzeichnet, daß Lappen mindestens eine Bohrung (24, 25) aufweist, eingebracht in den Lappen in seinem Abschnitt zwischen der Öffnung und dem Kopf.

7. Dübel nach einem der Ansprüche 1 bis 6, dadurch gekennzeichnet, daß das erste Lappenende (11) als vorzugsweise zugespitzte Schneide ausgebildet ist.

8. Dübel nach einem der vorangehenden Ansprüche, dadurch gekennzeichnet, daß er mindestens zwei jeweils mit einer Kante (4, 5, 6) benachbarte Lappen (1, 2, 3) in V-Anordnung umfaßt.

9. Dübel nach Anspruch 8, dadurch gekennzeichnet, daß er vier Lappen (51-54) in V-Anordnung mit zusammenfallenden Spitzen und Spitzenwinkeln von im wesentlichen neunzig Grad umfaßt.

10. Dübel nach Anspruch 9, dadurch gekennzeichnet, daß die vier Lappen paarweise verbunden sind zum Bilden von zwei ebenen Stücken (55, 56) mit jeweils einer Symmetrieachse (61, 62) und einer auf die Symmetrieachse zentrierten durchgehenden Öffnung (63, 64), daß ein erstes (55) der beiden ebenen Stücke einen auf seine Symmetrieachse (61) zentrierten und außerhalb der Öffnung (63) realisierten Einschnitt (66) aufweist, daß des zweite ebene tück (56) einen in der Symmetrieachse (62) dieses zweiten Stücks liegenden Schlitz (68) mit einer Breite aufweist, die etwas größer ist als die Dicke des ersten Stücks, welcher Schlitz die in dieses zweite Stück eingebrachte Öffnung (64) durchsetzt, und daß der Abstand des Schlitzendes (71) von der Kante dieser Öffnung (64) mindestens gleich dem Abstand zwischen dem Ende (69) des Einschnitts (66) und der Kante (67) der in das erste Stück eingebrachten Öffnung (63) ist, wobei die beiden Stücke in zwei im wesentlichen senkrechten Ebenen mittels ihres Schlitzes bzw. Einschnitts derart verbunden sind, daß das Schlitzende dem Einschnittende gegenüberliegt und die beiden Öffnungen im wesentlichen zentriert sind, während die Klebstofftasche in dem von den Kanten der beiden Öffnungen begrenzten Raum eingeschlossen ist.

**Claims**

1. A fixing peg suitable for being implanted in a friable material such as expanded polystyrene, for example, the peg comprising:

at least one oblong tab (1) made from a thin plate of stiff material, said tab having a first end (11) suitable for penetrating into said friable material;

a head (15) fixed to the second end (41-43) of said tab, the section of said head being larger than the cross-section of said tab so that together they form a shoulder (16);

the peg being characterized by the fact that it further comprises:

a closed pouch (20) made of a flexible material capable of being punctured and suitable for containing a glue (36) capable of gluing together the friable material (30) and the rigid material of said tab;

puncturing means associated with said tab for puncturing the pouch; and

means for maintaining said pouch in co-operation with said tab in such a manner that when thrust is applied to said pouch having at least a component substantially oriented from the first end of the tab towards the second end thereof, said pouch co-operates with said puncturing means to enable said glue to run over at least a portion of the wall of said tab.

2. A peg according to claim 1, characterized by the fact that said puncturing means are constituted by a pointed portion (21) integral with said tab and directed towards the first end (11) of said tab.

3. A peg according to claim 1 or 2, characterized by the fact that the means for maintaining said pouch (20) in co-operation with said tab (1) are constituted by an opening (22) formed in said tab.

4. A peg according to claim 3, characterized by the fact that said opening (22) goes right through said tab.

5. A peg according to any one of claims 2 to 4, characterized by the fact that said pointed portion (21) is integral with said tab on the edge (23) of said opening (22).

6. A peg according to any one of claims 3 to 5, characterized by the fact that said tab includes at least one hole (24, 25) formed through that portion of said tab which is situated between said opening and said head.

7. A peg according to any one of claims 1 to 6, characterized by the fact that said first end (11) of said tab has a cutting edge, which is advantageously chamfered.

8. A peg according to any preceding claim, characterized by the fact that it includes at least two tabs (1, 2, 3) which are adjacent to each other via an edge (4, 5, 6) so as to constitute a dihedral.

9. A peg according to claim 8, characterized by the fact that it includes four tabs (51-54) together forming dihedrals sharing a common ridge with dihedral angles being substantially equal to 90°.

10. A peg according to claim 9, characterized by the fact that said four tabs are associated in pairs in order to form two plane parts (55, 56) each having an axis of symmetry (61, 62) and each having a through opening (63, 64) centered on the axis of symmetry, a first one (55) of the two plane parts including a notch (66) centered on its axis of symmetry (61) and formed outside said opening (63), the second plane part (56) including a slot (68) whose width is slightly greater than the thickness of said first part and which extends along said axis of symmetry (62) of said second part, said slot passing through said opening (64) formed in said second part, with the distance between the end (71) of said slot (68) and the edge of said opening (68) being not less than the distance between the bottom (69) of the notch (66) from the edge (67) of the opening (63) made in said first part, said two parts being associated in two planes which are substantially perpendicular by means of their slot and notch in such a manner that the end of the slot faces the bottom of the notch and their two openings are substantially centered on each other, with said pouch of glue being imprisoned in the space delimited by the edges of said two openings.

fig. 1

fig. 2

fig. 3